# DEMANDE DE BREVET EUROPEEN

(11) **EP 1 264 625 A2**
(43) Date de publication de la demande: **11.12.2002**
(21) Numéro de dépôt: 02291425.3
(22) Date de dépôt: 08.06.2002
(51) Int. Cl.: B01D 21/24

(54) **Procédé et dispositif pour l'extraction de sédiments**

(30) Priorité: 08.06.2001 US 296794
(71) Demandeur: Eureaujet Sarl, 34080 Montpellier (FR)
(72) Inventeur: Portman, Ervin F., Cary North Carolina (US)

(57) **Abrégé**

L'invention concerne un procédé et un dispositif pour l'extraction du sédiment (1) se formant dans un mélange (2) de liquide et de matières en suspension contenu dans un récipient (3).

Le procédé selon l'invention se caractérise en ce qu'il consiste, pour extraire ledit sédiment (1) dudit récipient (3), à effectuer au moins les opérations suivantes :
- injecter de l'air sous pression dans la partie basse d'un tube d'extraction (4) dont l'extrémité correspondante (4A) est disposée à proximité, ou dans la masse, dudit sédiment (1) ;
- régler la fréquence, le débit et la pression de l'air injecté à la base du tube (4) pour, d'une part, propulser le mélange liquide-sédiment (1A) contenu dans la partie inférieure dudit tube vers sa partie supérieure et l'évacuer par son extrémité haute (4B) et, d'autre part, permettre à un nouveau mélange liquide-sédiment (1A) de remonter dans la partie inférieure du tube extracteur (4) avant l'injection d'une nouvelle quantité d'air ;
- récupérer ledit mélange liquide-sédiment (1A), propulsé, dans un deuxième récipient (5) dans lequel débouche l'extrémité haute (4B) du tube extracteur (4).

## Description

L'invention concerne un procédé et un dispositif pour l'extraction de sédiments se formant dans un mélange de liquide et de matières en suspension contenu dans un réceptacle et utilisant de l'air comprimé pour effectuer ladite opération d'extraction.

Les machines de découpe par jet abrasif sont utilisées dans de nombreuses industries pour travailler divers types de matériaux. Une machine de découpe à jet abrasif utilise un matériau abrasif, notamment du grenat, mélangé à un fluide sous pression, notamment de l'eau, le mélange étant projeté à grande vitesse. Après les opérations de découpe le mélange est recueilli dans un réceptacle dans lequel il y a décantation et accumulation du sédiment en partie basse de celui-ci. Avec le temps le niveau de l'abrasif dans le réceptacle est tel qu'il faut procéder à sa vidange. Vidanger l'abrasif accumulé avec les méthodes conventionnelles, notamment à la main ou par aspiration-succion, entraîne l'arrêt de la production ce qui cause une perte de rentabilité non négligeable.

La présente invention utilise un procédé et un dispositif à base d'air comprimé pulsé et un collecteur passif pour retirer en continu les sédiments, notamment du grenat, qui se sont accumulés dans le fond d'un réceptacle, notamment une piscine, d'une machine de découpe au jet d'eau abrasif.
Le principal avantage de cette invention est de s'affranchir des limitations des méthodes connues en éliminant le recours à des centrifugeuses, ou des pompes, et à leurs équipements périphériques, qui comportent des pièces mécaniques en mouvement au contact du sédiment véhiculé, donc des matières abrasives qu'il contient, alors que dans le dispositif selon l'invention il n'y a aucune pièce en mouvement.
Le procédé selon l'invention se caractérise essentiellement en ce qu'il consiste, pour extraire ledit sédiment dudit récipient, à effectuer au moins les opérations suivantes :
- injecter de l'air sous pression dans la partie basse d'un tube d'extraction dont l'extrémité correspondante est disposée à proximité, ou dans la masse, dudit sédiment ;
- régler la fréquence, le débit et la pression de l'air injecté à la base dudit tube pour, d'une part, propulser le mélange liquide-sédiment contenu dans la partie inférieure de celui-ci vers sa partie supérieure et l'évacuer par son extrémité haute (4B) et, d'autre part, permettre à un nouveau mélange liquide-sédiment (1A) de remonter dans la partie inférieure dudit tube extracteur avant l'injection d'une nouvelle quantité d'air ;
- récupérer le mélange liquide-sédiment, propulsé, dans un deuxième récipient dans lequel débouche l'extrémité haute du tube extracteur.
Le procédé selon l'invention se caractérise également en ce qu'il consiste à diffuser, au voisinage de l'extrémité basse du tube d'extraction, un fluide sous pression adapté pour donner au sédiment, contenu dans la zone entourant ladite extrémité, une consistance favorisant son extraction.

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.
Sur ces dessins :

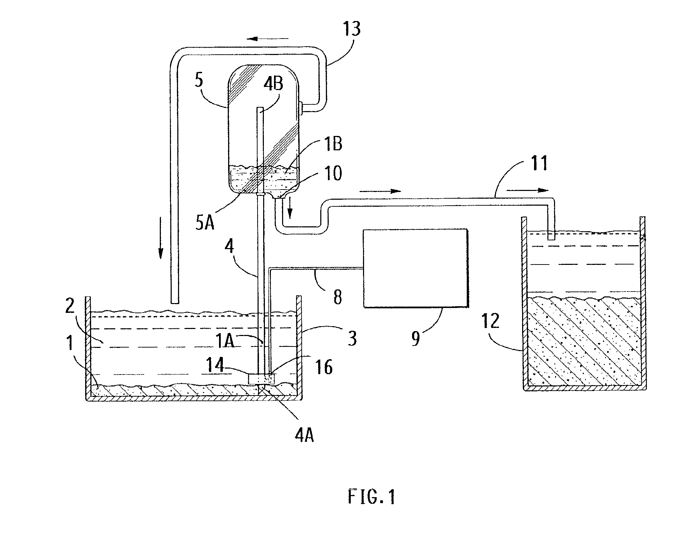

- la figure 1 est une représentation schématique du dispositif selon l'invention ;

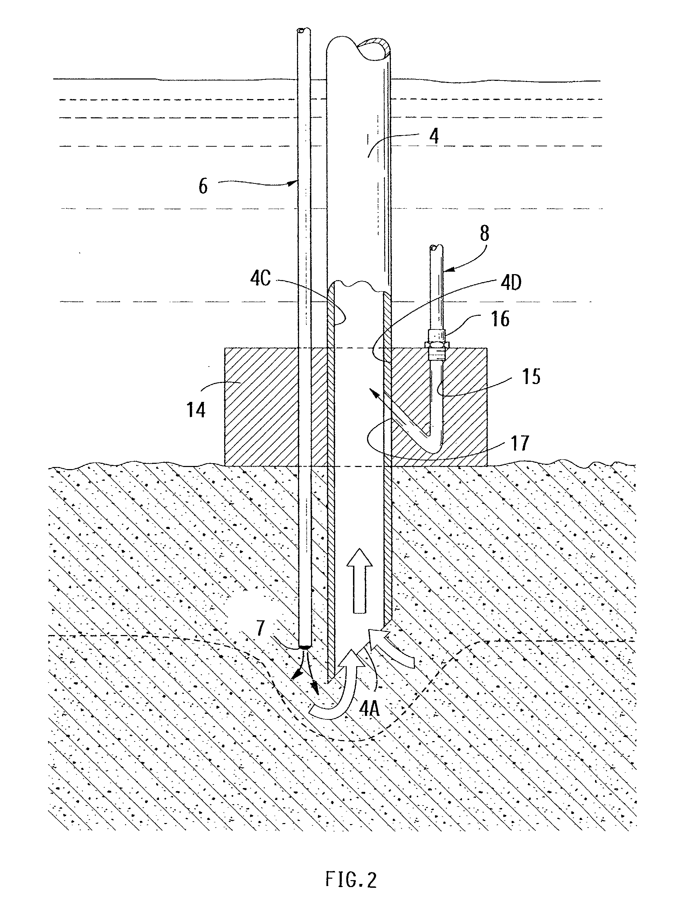

- la figure 2 est une vue de détail en coupe de l'embase du tube d'extraction montrant l'utilisation d'une canalisation adjacente pour diffuser un fluide dans le voisinage de l'extrémité dudit tube.

Le procédé, pour l'extraction du sédiment (1) se formant dans un mélange (2) de liquide et de matières en suspension contenu dans un récipient (3), mis en oeuvre par le dispositif représenté aux figures, consiste essentiellement, pour extraire ledit sédiment (1) dudit récipient (3), à effectuer au moins les opérations suivantes :
- injecter de l'air sous pression dans la partie basse d'un tube d'extraction (4) dont l'extrémité correspondante (4A) est disposée à proximité, ou dans la masse, dudit sédiment (1) ;
- régler la fréquence, le débit et la pression de l'air injecté à la base du tube (4) pour, d'une part, propulser le mélange liquide-sédiment (1A) contenu dans la partie inférieure dudit tube vers sa partie supérieure et l'évacuer par son extrémité haute (4B) et, d'autre part, permettre à un nouveau mélange liquide-sédiment (1A) de remonter dans la partie inférieure du tube extracteur (4) avant l'injection d'une nouvelle quantité d'air ;
- récupérer ledit mélange liquide-sédiment (1A), propulsé, dans un deuxième récipient (5) dans lequel débouche l'extrémité haute (4B) du tube extracteur (4).
Le procédé en question consiste également à diffuser, au voisinage de l'extrémité basse (4A) du tube d'extraction (4), un fluide sous pression adapté pour donner au sédiment (1), contenu dans la zone entourant ladite extrémité (4A), une consistance favorisant son extraction.
Le dispositif en question comporte essentiellement :
- un premier récipient (3), en communication avec l'atmosphère, contenant le sédiment (1) à extraire et le mélange (2) de liquide et de matières en suspension ;
- un deuxième récipient (5), également en communication avec l'atmosphère, servant à la récupération du sédiment extrait (1B) et dont la base (5A) est disposée à une hauteur supérieure à celle du niveau haut (2A) du mélange (2) contenu dans le premier récipient (3) ;
- un tube d'extraction (4) dont l'extrémité basse (4A) est disposée à proximité, ou dans la masse, dudit sédiment (1) et dont l'extrémité haute (4B) débouche librement à l'intérieur du deuxième récipient (5).
Il comporte également, pour diffuser le fluide sous pression au voisinage de l'extrémité basse (4A) du tube d'extraction (4), une canalisation d'amenée (6) munie, à son extrémité basse, d'au moins un diffuseur (7).
L'air sous pression injecté à la base du tube extracteur (4), est amené par une canalisation (8) débouchant dans ledit tube et est généré par une source d'air régulée (9).
Le fond (5A) du récipient (5) comporte un orifice (10) sur lequel est reliée une canalisation (11) adaptée pour extraire, par gravité, le sédiment (1B) récupéré dans ledit récipient et débouchant dans au moins un bac de décantation (12).
Le récipient (5) comporte également une canalisation (13) pour recycler, dans le récipient (3), le trop plein de liquide.
La canalisation (8) est reliée au tube (4) au moyen d'une pièce de liaison (14) qui comporte une canalisation (15) dont l'une de ses extrémités reçoit l'extrémité de la canalisation (8) par l'intermédiaire d'un manchon (16) et dont l'autre extrémité débouche dans le tube (4) au travers d'une ouverture (17).
Le tube (4) comporte une paroi interne (4C) et une paroi externe (4D) qui traverse la pièce (14). Ladite pièce étant également traversée par la canalisation (6).
L'air injecté en partie basse du tube d'extraction (4), sous l'effet de la pression atmosphérique, de la poussée d'Archimède et de la pression de l'air, pousse la colonne de mélange (1A) vers le haut et la transfère dans le récipient (5).
Le fluide, notamment de l'eau et/ou un gaz (par exemple de l'air), peut être diffusé par un ou plusieurs diffuseurs pour, d'une part, désagréger la masse de sédiment accumulée au fond du récipient et, d'autre part, faciliter l'obtention d'un mélange liquide-sédiment suffisamment fluide et homogène pour pénétrer aisément et rapidement dans la partie basse du tube d'extraction
Le réceptacle (5) peut être réalisé partiellement ou totalement en matériaux transparent, notamment en verre, pour permettre le suivi visuel de l'effet de pompage.
En début de cycle le tube d'extraction (4) se remplit de mélange liquide-sédiment (1A) jusqu'au niveau supérieur du mélange (2) contenu dans le récipient (3).
La source d'air (9) délivre alors une certaine quantité d'air sous pression qui est injectée à la base du tube d'extraction. La bulle ainsi formée dans ledit tube pousse, vers le récipient supérieur, la colonne de mélange liquide-sédiment et la transfère dans ledit récipient.
Le tube d'extraction se trouve alors libre (à la pression atmosphérique) et se remplit du mélange liquide-sédiment contenu dans le récipient.
Avant et/ou pendant ledit cycle, on peut diffuser un fluide à proximité ou au sein de la masse (1) de sédiment.

Bien entendu, l'invention n'est pas limitée aux modes de réalisation et de fonctionnement décrits ou représentés dans lesquels on pourra prévoir d'autres variantes, en particulier dans :
- la forme, les dimensions, le nombre et la conception des divers sous-ensembles constitutifs du dispositif ;
- leur mode de fonctionnement ;
pour autant que l'on reste dans le cadre du procédé et du dispositif proposé, à savoir : extraire des sédiments par injection programmée d'air à la base d'un tube débouchant, en partie basse, dans le mélange contenant le sédiment à extraire et, en partie haute, dans un récipient de récupération.

## Revendications

1. Procédé pour l'extraction du sédiment (1) se formant dans un mélange (2) de liquide et de matières en suspension contenu dans un récipient (3), **caractérisé en ce qu'**il consiste, pour extraire ledit sédiment (1) dudit récipient (3), à effectuer au moins les opérations suivantes :
- injecter de l'air sous pression dans la partie basse d'un tube d'extraction (4) dont l'extrémité correspondante (4A) est disposée à proximité, ou dans la masse, dudit sédiment (1) ;
- régler la fréquence, le débit et la pression de l'air injecté à la base du tube (4) pour, d'une part, propulser le mélange liquide-sédiment (1A) contenu dans la partie inférieure dudit tube vers sa partie supérieure et l'évacuer par son extrémité haute (4B) et, d'autre part, permettre à un nouveau mélange liquide-sédiment (1A) de remonter dans la partie inférieure du tube extracteur (4) avant l'injection d'une nouvelle quantité d'air ;
- récupérer ledit mélange liquide-sédiment (1A), propulsé, dans un deuxième récipient (5) dans lequel débouche l'extrémité haute (4B) du tube extracteur (4).

2. Procédé, selon la revendication 1, **caractérisé en ce qu'**il consiste à diffuser, au voisinage de l'extrémité basse (4A) du tube d'extraction (4), un fluide sous pression adapté pour donner au sédiment (1), contenu dans la zone entourant ladite extrémité (4A), une consistance favorisant son extraction.

3. Dispositif pour la mise en oeuvre du procédé selon la revendication 1, **caractérisé en ce qu'**il comporte essentiellement :
- un premier récipient (3), en communication avec l'atmosphère, contenant le sédiment (1) à extraire et le mélange (2) de liquide et de matières en suspension ;
- un deuxième récipient (5), également en communication avec l'atmosphère, servant à la récupération du sédiment extrait (1B) et dont la base (5A) est disposée à une hauteur supérieure à celle du niveau haut (2A) du mélange (2) contenu dans le premier récipient (3). ;
- un tube d'extraction (4) dont l'extrémité basse (4A) est disposée à proximité, ou dans la masse, dudit sédiment (1) et dont l'extrémité haute (4B) débouche librement à l'intérieur du deuxième récipient (5).

4. Dispositif pour la mise en oeuvre du procédé selon la revendication 2, **caractérisé en ce que** le fluide sous pression diffusé au voisinage de l'extrémité basse (4A) du tube d'extraction (4), est amené par une canalisation (6) munie, à son extrémité basse, d'au moins un diffuseur (7).

5. Dispositif, selon la revendication 3, **caractérisé en ce que** l'air sous pression injecté à la base du tube extracteur (4) est amené par une canalisation (8) débouchant dans ledit tube et est généré par une source d'air régulée (9).

6. Dispositif selon la revendication 3, **caractérisé en ce que** le fond (5A) du récipient (5) comporte un orifice (10) sur lequel est reliée une canalisation (11), adaptée pour extraire, par gravité, le sédiment (1B) récupéré dans ledit récipient, débouchant dans au moins un bac de décantation (12).
